# EUROPEAN PATENT SPECIFICATION

(11) **EP 3 692 340 B1**
(45) Date of publication and mention of the grant of the patent: **10.05.2023**
(21) Application number: 18807134.4
(22) Date of filing: 03.10.2018
(51) Int. Cl.: G01D 4/00, G01F 15/063, G01F 15/14, G01F 15/18

(54) **ADAPTER FOR REMOTE READING OF WATER METER INDICATIONS**
ADAPTER ZUM FERNABLESEN VON WASSERZÄHLERANZEIGEN
ADAPTATEUR POUR TÉLÉ-RELEVÉ D'INDICATIONS DE COMPTEUR D'EAU

(30) Priority: 03.10.2017 PL 42304217
(43) Date of publication of application: 12.08.2020
(73) Proprietor: Apator Powogaz Spolka Akcyjna, 62 023 Zerniki (PL)
(72) Inventor: SZULC, Tomasz, 61-131 Poznan (PL)
(74) Representative: Wroblewski, Marcin Jan
(86) International application number: PCT/PL2018/000092
(87) International publication number: WO 2019/070138

(56) References cited:
- DE-U1-202011 002 470
- FR-A1- 2 866 680
- US-A1- 2009 183 584

## Description

A subject of this invention is an adapter for remote reading of water meter indications.

The water meter readout system was based and is still partially based on reading made by collectors. To avoid disadvantages of this method, such as high cost, possibility to make mistakes by collectors or unreliability of readouts, the remote water meter readout systems are introduced. To do that, relevant special devices, such as modules or adapters, are selected which collaborate and communicate with a given type of water meter, and which gather information from the water meter and transfer further the information remotely.

Known are water meters with readout system provided with a magnet, in which rotations of the permanent magnet or magnets, installed on the impeller, are converted into electrical pulses read by a static magnetic sensor that transfers this information to the intermediate system and to the reading system. The disadvantage of such a solution is sensitivity of water meters to external interference with magnetic field.

Known are inductive remote readout systems for water meters specially customized and equipped with a readout pointer coated with metallized film or metal sheet. A suitable shape and properties of the pointer enable interaction with three equally spaced coils installed in the communication module. An electronic circuit of the module detects the pointer swing below the coils and, based on this, information on the water volume, flow direction, attempts of illegal removal and battery voltage level are recorded. A one-piece module is installed directly on the water meter body and such a module manufactured by a specific manufacturer is tailored to match the water meters produced by that manufacturer.

Widely known and used are optical, wire, wireless and pulse adapters for remote reading of water meters manufactured by the APATOR POWOGAZ company (e.g. JS Smart for flats and apartments, JS Master for houses, and MWN Nubis for industrial applications). These adapters are installed on the housing of water meter counter mechanism using three latches inserted in three snap locating seats equally spaced on the external periphery of the housing. A drawback of this solution is that each water meter type requires the use of separate adapter so that the central axis of the reading pointer is aligned with the central axis of optical reader.

Also known is a solution of water meter with detachable electronic module for remote readout of water meter indications from patent description No. EP2365299. In that solution, the water meter is made of two main parts, bottom and top. The top part incorporates the counting mechanism covered with a transparent window integrated with the top part of water meter. Around the housing circumference, L-shape seats are made, advantageous three, spaced in equal distances, being the first component of bayonet joint. Advantageous, the housing has additional protective components in a form of wedges or ribs. Also, it is advantageous, that the housing is equipped with a cut, coming outward from it, made in the transparent housing of top part of water meter, enabling the use of additional anti-sabotage sealing. The water meter is equipped with detachable electronic module in a form of adapter attached to the water meter housing. The adapter is composed of a window that enables readout of meters and a housing in which electronic components are installed. From the water meter side, the adapter is provided with integrated ring in which latches are made, advantageous three, which constitute the other component of bayonet joint and corresponding to snap seats made in the housing of water meter, which enable mutual connection of the module with the housing of water meter by installing the electronic module on the housing of water meter and turning it clockwise to tightly join both parts.

Moreover, from the solution No. US2009183584 known is an invention relates to a gauge monitoring assembly, comprising an adapter that mechanically positions a monitoring device to acquire a gauge image and then convert that gauge image into a digital value. Furthermore, the adapter has a fastening mechanism having at least a first fastening portion attachable to a gauge surface, and an interface that is physically attached to the fastening mechanism. The interface includes at least a primary adapter with a detachable connection to the monitoring device that enables the monitoring device to be removed while the fastening portion remains attached to the gauge surface. Upon such removal, the monitored equipment may still be visible for inspection and/or cleaning. Further, such rapid/easy removal may enable the monitoring device to be serviced and/or replaced without disturbing corresponding equipment that is being monitored.

From the state of art No. DE202011002470U1 there is a known solution representing a remote readout module for mechanical water meters which have a basic housing in which a counter is installed in a predetermined angular position, which are visibly housed on the top through a glass body, in the form of at least one pointer element which is driven to rotate during operation. Furthermore, a sensor housing is detachably arranged above the pointer element, the sensor of which detects the rotary movement of the pointer element, detects and outputs control pulses to an evaluation device in accordance with the rotary movement, which from the control pulses flow through the water meter during operation. Moreover, volume flow is calculated and the glass body is pressed tightly against the base housing by means of a screw ring screwed onto the base housing and a sliding ring. Finally, support ring is provided for the detachable reception of the remote readout module, which is arranged above the glass body and radially inside the screw ring and with the sliding ring is fixedly coupled. The support ring has at least one form-fitting element with which the remote reading module engages in a predetermined angular position relative to the counter can be brought and that the sensor of the remote readout module is arranged in this predetermined angular position above the pointer element.

Moreover, from the solution No. FR2866680 is known a method of selective attachment of a set of removable modules to counters, especially water meters. The method is enabled securing the modules of set only to at least a selected set of counters, such that only modules of assembly can be secured to said counters, which enables the differentiation of counters of series relative to other series of counters. attachment being made possible by fixing means integral to each of said modules cooperating with fastening means integral with each of said counters, said fixing means of said modules and said counters being complementarily shaped thus associating and fastening said modules to said counters only.

All the above electronic modules require to earlier tailor the water meters and are compatible with water meters manufacturer by one company. This limits the capability to use one electronic module to one type of water meters.

The purpose of solution used in this invention was furnishing a universal match adapter provided with the electronic module, to be installed on various types of water meters, regardless their type and purpose, and thus, different position of the pointer reading the measurement of water flow volume. Unexpectedly it was found out that the use of intermediate ring tailored to match the snap locating seats made in the housing of counter mechanism, being a common feature of water meters of different design and purpose, allow for reading out on all three types of water meters in which the reading pointers ae located in different places on the disc of water meter counting mechanism.

The essence of the invention is an adapter for remote reading of water meter as defined in claim 1, said water meter comprising a counter mechanism housing and a pointer reader and being provided with snap locating seats on the outer circumference of the counter mechanism housing. Said adapter comprising an electronic module, adapted to be installed above the pointer reader of the counter mechanism housing and an intermediate ring, wherein the electronic module is adapted to be attached to the water meter counting mechanism housing via the intermediate ring. The intermediate ring has on its lower inner edge springy latches equally spread around the circumference of the intermediate ring and adapted to match the snap locating seats on the outer circumference of the counter mechanism housing, characterized in that the electronic module contains an induction field area for the remote inductive detection of the pointer reader, the intermediate ring on the its upper edge, is coupled with the electronic module with a detachable joint. Said detachable joint being by means of external latches, located on the external profiles of that upper edge of the intermediate ring, with corresponding external snap holes, provided on the longer sides of the body of electronic module in the distance corresponding to the spread of external latches and by means of internal latches, located on the inner profile of the upper edge of the intermediate ring, with corresponding internal snap holes, provided on longer sides of the body of electronic module, in a distance corresponding to the spread of internal latches.

It is advantageous that the intermediate ring, on the lower inner edge, has nine equally spread latches.

It is advantageous that the intermediate ring and the electronic module are made of polycarbonate.

An advantage of this invention is that it enables attachment of the same electronic module seated on the same intermediate ring with different types and models of water meters. Additionally, the shape of electronic module and the method of its attachment to the housing of counting mechanism of the meter allows for reading the counter disc image with no need to remove the module itself. Because the module housing is symmetrical, it is not needed to use additional detail parts when changing work position of the module.

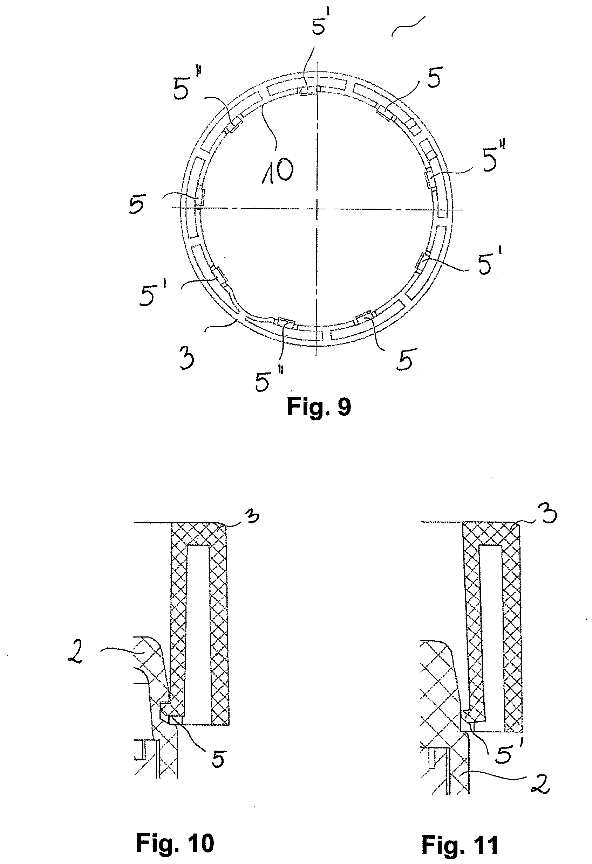

The subject of this invention is described better on realization examples and on drawing in which fig. 1 presents exploded view of water meter, intermediate ring, and electronic module in disassembled condition; Fig. 2 presents perspective top view of water meter, intermediate ring and electronic module assembled together; fig. 3 presents the top view of electronic module installed on the ring placed on the housing of counting mechanism type C; fig. 4 presents top view of the intermediate ring alone placed on the housing of counting mechanism type C; fig. 5 presents top view of electronic module installed on the intermediate ring and located on the housing of counting mechanism type B; fig. 6 presents top view of intermediate ring alone installed on the housing of counting mechanism type B; fig. 7 presents top view of intermediate ring alone installed on the housing of counting mechanism type A; fig. 8 presents top view of intermediate ring alone installed on the housing of counting mechanism type A; fig. 9 presents top view of intermediate ring viewed from bottom; fig. 10 presents springy latch snapped in the snap seat; fig. 11 presents springy latch not snapped in the snap seat.

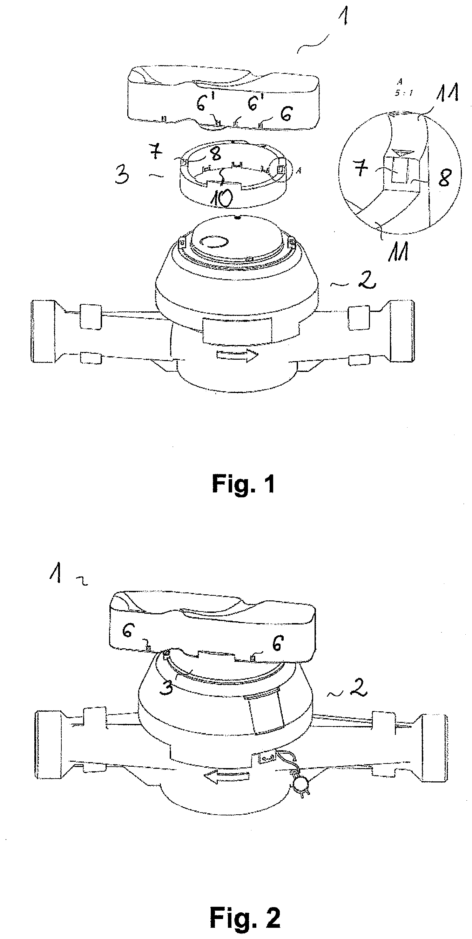

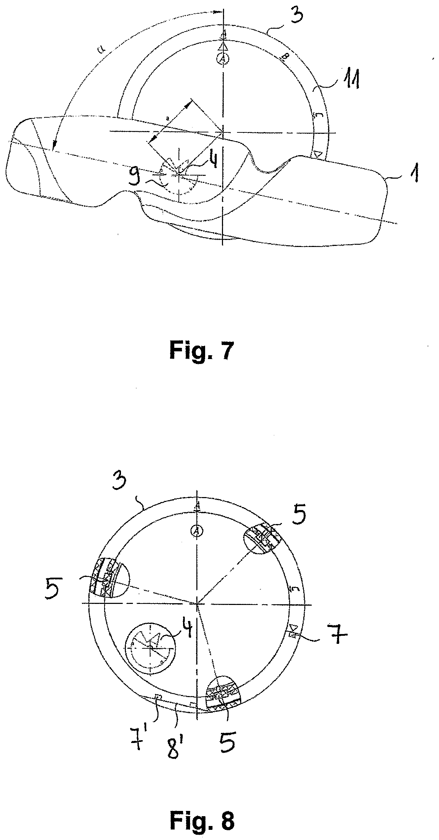

Example 1: An adapter for remote reading of water meter indications presented in fig. 1 is made of electronic module (1) and intermediate ring (3) and is attached to the counting mechanism of water meter. The counting mechanism of water meter has a cylindrical shape and is provided with housing (2), where on the upper edge, equally spaced snap locating seats are made. One of the counting mechanism components is a reading pointer (4) located on the mechanism surface and having an inductive and non-inductive segments. The electronic module (1) has a shape of longitudinal rectangular body with chamfered edges inside which electronic components of the adapter are located. The electronic module (1) has on both longer sides, reliefs which enable readout of indications made by reading pointer (4) with no need to remove the electronic module (1). In a base of the electronic module (1), positioned closer to the housing of counting mechanism (2), there are round shapes within which induction field area (9) is located. The electronic module (1) is attached to the housing of counting mechanism of water meter (2) via an intermediate ring (3). The intermediate ring (3), on a lower inner edge (10) has nine rectangular springy latches: three (5), three (5') and three (5"), equally spaced on circumference of the intermediate ring (3). An Upper edge (11) of the intermediate ring (3) has reliefs in the middle of its circumference and, thus, it is shaped so that the electronic module (1) can be seated stably on it and attached to the intermediate ring (3). A detachable joint between the electronic module (1) and the intermediate ring (3) is a system of wedge-shaped latches (7, 7') and rectangular snap holes (6, 6'). The external latches (7), placed on the outer profiles (8) of upper edge (11), are attached with corresponding external snap holes (6), located on one of longer sides of the electronic module (1) body in a distance corresponding to the spread of external latches (7). The electronic module (1) is attached on the other side with the intermediate ring (3) by means of internal latches (7'), located on the inner profile (8') of the intermediate ring (3) edge. In position A, presented in fig. 7, the marker A on the intermediate ring (3) and the marker A on the water meter counting mechanism housing (2) are aligned with each other. In this position, three springy latches (5) are positioned in snap locating seats on the outer circumference of the water meter counting mechanism housing (2), and the other springy latches (5', 5") rest against the outer wall of counting mechanism housing (2). Then the axis of induction field (9) is aligned with the axis of reading indicator (4). In this position, the angle α between the axis of electronic module (1) and axis of intermediate ring (3), passing though the marker A, is 79°. And the segment a between the center of water meter counting mechanism and the center of induction field (9) is 21 mm long.

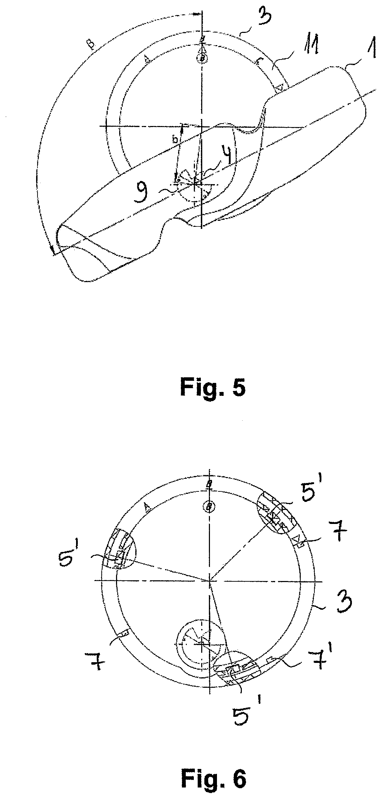

Example 2: the adapter, likewise in example 1, but in position B presented in fig. 5, markers B on the intermediate ring (3) and B on the water meter counting mechanism housing (2), are aligned with each other. In this position three springy latches (5') are positioned in snap locating seats on outer circumference of the water meter counting mechanism housing (2), and the other springy latches (5 and 5") rest against the outer wall of counting mechanism housing (2). Then the axis of induction field (9) is aligned with the axis of reading pointer (4). In this position, the angle β between the axis of electronic module (1) and axis of the intermediate ring (3), passing though the marker B, is 117°. And the segment b between the center of water meter counting mechanism and the center of induction field (9) is 22 mm long.

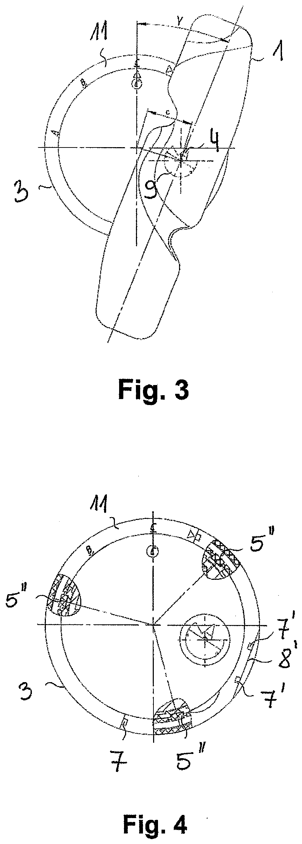

Example 3: the adapter, likewise in example 1, but in position C, presented in fig. 3, markers C on the intermediate ring (3) and C on the water meter counting mechanism housing (2) are aligned with each other. In this position three springy latches (5") are positioned in snap locating seats on outer circumference of outer circumference of the water meter counting mechanism housing (2), and the other springy latches (5 and 5') rest against the outer wall of counting mechanism housing (2), and the electronic module (1) is placed on the intermediate ring (3) in position reversed by 180° in relation to A and B, so that the axis of induction field (9) is aligned with the axis of reading pointer (4). In this position, the angle y between the axis of electronic module (1) and axis of the intermediate ring (3) passing though the marker C is 22°. And the segment c between the center of water meter counting mechanism and the center of induction field (9) is 18 mm.

### The list of designations in figures:

- 1 -: Electronic module
- 2 -: water meter counter mechanism housing
- 3 -: intermediate ring
- 4 -: readout pointer
- 5 -: springy latches in position A
- 5' -: springy latches in position B
- 5" -: springy latches in position C
- 6 -: external snap holes
- 6' -: internal snap holes
- 7 -: external latches
- 7' -: internal-latches
- 8 -: external ring edge profile
- 8' -: inner ring edge profile
- 9 -: induction field area
- 10 -: lower inner edge of intermediate ring
- 11 -: upper edge of intermediate ring
- A, B, C -: ring position markers

## Claims

1. An adapter for remote reading of water meter, said water meter comprising a counter mechanism housing (2) and a pointer reader (4) and being provided with snap locating seats on the outer circumference of the counter mechanism housing (2), said adapter comprising
- an electronic module (1), adapted to be installed above the pointer reader (4) of the counter mechanism housing (2),
- an intermediate ring (3),
wherein the electronic module (1) is adapted to be attached to the water meter counting mechanism housing (2) via the intermediate ring (3)
wherein the intermediate ring (3) has, on its lower inner edge (10) has springy latches (5, 5', 5") equally spread around the circumference of the intermediate ring (3) and adapted to match the snap locating seats on the outer circumference of the counter mechanism housing (2), **characterized in that**
the electronic module (1) contains an induction field area (9) for the remote inductive detection of the pointer reader (4), the intermediate ring (3) on its upper edge (11), is coupled with the electronic module (1) with a detachable joint, said detachable joint being
- by means of external latches (7), located on the external profiles (8) of that upper edge (11) of the intermediate ring (3), with corresponding external snap holes (6), provided on the longer sides of the body of electronic module (1) in the distance corresponding to the spread of external latches (7) and
- by means of internal latches (7'), located on the inner profile (8') of the upper edge (11) of the intermediate ring (3), with corresponding internal snap holes (6'), provided on longer sides of the body of electronic module (1), in a distance corresponding to the spread of internal latches (7').

2. Adapter according to claim 1 featuring, that the intermediate ring (3) on the lower inner edge (10) has nine equally spread latches (5, 5', 5").

3. Adapter according to claim 1 or 2, featuring that the intermediate ring (3) and the electronic module (1) are made of polycarbonate.

## Patentansprüche

1. Adapter zur Fernauslesung eines Wasserzählers, wobei der Wasserzähler ein Zählwerksgehäuse (2) und einen Zeiger (4) umfasst und mit Einrastöffnungen am Außenumfang des Zählwerksgehäuses (2) ausgestattet ist, wobei der Adapter
- ein Elektronikmodul (1) umfasst, das zur Installation über dem Zeiger (4) des Zählwerksgehäuses (2) angepasst ist,
- einen Zwischenring (3) umfasst,
wobei das Elektronikmodul (1) so angepasst ist, dass es über den Zwischenring (3) an dem Zählwerksgehäuse (2) des Wasserzählers befestigt werden kann,
wobei der Zwischenring (3) an seinem unteren Innenrand (10) federnde Rastnasen (5, 5', 5") gleichmäßig über den Umfang des Zwischenrings (3) verteilt besitzt und zur Übereinstimmung mit den Einrastöffnungen am Außenumfang des Zählwerksgehäuses (2) angepasst ist,
**dadurch gekennzeichnet, dass**
das Elektronikmodul (1) einen Induktionsfeldbereich (9) für die induktive Fernerfassung des Zeigers (4) enthält, wobei der Zwischenring (3) an seinem oberen Rand (11) mit dem Elektronikmodul (1) mit einer lösbaren Verbindung gekoppelt ist, wobei sich die lösbare Verbindung
- mittels außenliegender Rastnasen (7) an den Außenprofilen (8) des oberen Randes (11) des Zwischenrings (3) befindet, mit entsprechenden außenliegenden Einrastlöchern (6), die an den längeren Seiten des Trägerkörpers des Elektronikmoduls (1) in dem Abstand vorgesehen sind, der der Verteilung der außenliegenden Rastnasen (7) entspricht, und
- mittels innenliegender Rastnasen (7') an den Innenprofilen (8') des oberen Randes (11) des Zwischenrings (3) befindet, mit entsprechenden innenliegenden Einrastlöchern (6'), die an den längeren Seiten des Trägerkörpers des Elektronikmoduls (1) in einem Abstand vorgesehen sind, der der Verteilung der innenliegenden Rastnasen (7') entspricht.

2. Adapter nach Anspruch 1, **dadurch gekennzeichnet, dass** der Zwischenring (3) am unteren Innenrand (10) neun gleichmäßig verteilte Rastnasen (5, 5', 5") aufweist.

3. Adapter nach Anspruch 1 oder 2, **dadurch gekennzeichnet, dass** der Zwischenring (3) und das Elektronikmodul (1) aus Polycarbonat hergestellt sind.

## Revendications

1. Un adaptateur pour la lecture à distance d'un compteur d'eau, ledit compteur d'eau comprenant un boîtier de mécanisme de comptage (2) et un lecteur de pointeur (4) et étant muni de sièges de positionnement à encliquetage sur la circonférence extérieure du boîtier de mécanisme de comptage (2), ledit adaptateur comprenant
- un module électronique (1), adapté pour être installé au-dessus du lecteur de pointeur (4) du boîtier de mécanisme de comptage (2),
- une bague intermédiaire (3),
dans lequel le module électronique (1) est adapté pour être fixé au boîtier de mécanisme de comptage (2) du compteur d'eau par l'intermédiaire de la bague intermédiaire (3),
dans lequel la bague intermédiaire (3) comporte, sur son bord intérieur inférieur (10), des loquets élastiques (5, 5', 5") répartis régulièrement autour de la circonférence de la bague intermédiaire (3) et adaptés pour correspondre aux sièges de positionnement par encliquetage sur la circonférence extérieure du logement de mécanisme de comptage (2),
**caractérisé en ce que**
le module électronique (1) contient une zone de champ d'induction (9) pour la détection inductive à distance du lecteur de pointeur (4), la bague intermédiaire (3), sur son bord supérieur (11), est couplée au module électronique (1) avec un joint détachable, ledit joint détachable étant
- au moyen de loquets externes (7), situés sur les profils externes (8) du bord supérieur (11) de la bague intermédiaire (3), avec des trous d'encliquetage externes correspondants (6), prévus sur les côtés les plus longs du corps du module électronique (1) à une distance correspondant à l'écartement des loquets externes (7) et
- au moyen de loquets internes (7'), situés sur le profil intérieur (8') du bord supérieur (11) de la bague intermédiaire (3), avec des trous d'encliquetage internes correspondants (6'), prévus sur les côtés les plus longs du corps du module électronique (1), à une distance correspondant à l'écartement des loquets internes (7').

2. L'adaptateur selon la revendication 1, **caractérisé en ce que** la bague intermédiaire (3) sur le bord intérieur inférieur (10) comporte neuf loquets (5, 5', 5") régulièrement répartis.

3. L'adaptateur selon la revendication 1 ou 2, **caractérisé en ce que** la bague intermédiaire (3) et le module électronique (1) sont réalisés en polycarbonate.
